(19) Europäisches Patentamt
European Patent Office
Office européen des brevets

(11) Veröffentlichungsnummer: **0 134 460 B1**

(12) # EUROPÄISCHE PATENTSCHRIFT

(45) Veröffentlichungstag der Patentschrift: **14.09.88**

(51) Int. Cl.4: **G 01 N 15/10**

(21) Anmeldenummer: **84107544.3**

(22) Anmeldetag: **29.06.84**

(54) **Verfahren zur Analyse von Teilchen und Gerät zur Durchführung des Verfahrens.**

(30) Priorität: **08.07.83 CH 3769/83**

(43) Veröffentlichungstag der Anmeldung: **20.03.85 Patentblatt 85/12**

(45) Bekanntmachung des Hinweises auf die Patenterteilung: **14.09.88 Patentblatt 88/37**

(84) Benannte Vertragsstaaten: **CH DE FR GB IT LI NL SE**

(56) Entgegenhaltungen:
**DE - A - 2 539 864**
**FR - A - 2 146 819**

**MEDICAL AND BIOLOGICAL ENGINEERING, Band 11, Nr. 4, July 1973, Seiten 447-454; J. SCHULZ et al.: "Electrical sizing and counting of platelets in whole blood"**

(73) Patentinhaber: **KONTRON-HOLDING AG, Bernerstrasse Süd 169, CH-8048 Zürich (CH)**

(72) Erfinder: **Degrave, Philippe Louis, 20 rue du Maréchal Foch, F-78220 Viroflay (FR)**
Erfinder: **Lepage, Jean Pierre, Appartement 2010 Résidence du Parc, F-60200 Margny les Compiègnes (FR)**

(74) Vertreter: **Körber, Wolfhart, Dr. et al, Patentanwälte Dipl.-Ing. H. Mitscherlich Dipl.-Ing. K. Gunschmann Dr.rer.nat. W. Körber Dipl.Ing. J. Schmidt-Evers Dipl.-Ing. W. Melzer Steinsdorfstrasse 10, D-8000 München 22 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 134 460 B1

**Beschreibung**

Die Erfindung betrifft ein Verfahren zur Analyse von Teilchen gemäss dem Oberbegriff des Patentanspruches 1.

Die Erfindung betrifft ausserdem ein Gerät zur Durchführung des Verfahrens.

Die Erfindung befasst sich im einzelnen mit der Diskriminierung von Störsignalen in einem elektronischen Analysegerät zur Analyse von Teilchen, mit dessen Hilfe sich partikuläre Systeme nach dem sogenannten Coulter-Detektorprinzip erforschen lassen.

Das Coulter-Detektorprinzip ist in der US-PS 2 656 508 beschrieben. Man lässt gemäss diesem Prinzip einen flüssigen Elektrolyten, der Teilchen in Suspension enthält, aus einem ersten Gefäss durch eine in einer Trennwandung angeordnete mikroskopische Öffnung in ein zweites Gefäss treten. Die Öffnung befindet sich in einem elektrischen Feld, das durch Anlegen von elektrischer Energie an in den Elektrolyten getauchte Elektroden erzeugt wird. Die Elektroden befinden sich zu beiden Seiten der Öffnung, so dass eine momentane Änderung der zwischen den Elektroden gemessenen elektrischen Impedanz des Elektrolyten auftritt, wenn ein in dem Elektrolyten schwebendes mikroskopisches Teilchen durch die Öffnung hindurchtritt. Diese Impedanzänderung leitet einen Teil der Anregungsenergie in die zugeordneten elektrischen Messschaltungen ab und erzeugt in diesen Schaltungen einen elektrischen Impuls. Falls die Bewegungsbahn des Teilchens zumindest annähernd mit der Längsachse der Öffnung zusammenfällt, ist die Amplitude dieses Impulses ein hinreichend genaues Mass für das Volumen des Teilchens. Die Zählung der erzeugten Impulse erlaubt bis zu einer Frequenz von mehreren Tausend pro Sekunde eine Zählung der Teilchen, die in die Öffnung treten.

Bei einem Teilchenzähler, der nach dem Coulter-Detektorprinzip arbeitet, wird im Prinzip jeder Impuls gezählt, seine Amplitude wird registriert und die Gesamtheit der so erhaltenen Information wird in Form eines Histogramms dargestellt, das die Verteilung der Teilchen nach ihrem Volumen zeigt. In einem Gerät zur Analyse von Blutkörperchen werden auf der Grundlage der in einem solchen Histogramm enthaltenen Information gewisse Parameter berechnet, die für die medizinische Diagnose von Bedeutung sind. Es ist mithin wichtig, dass diese Information so genau wie möglich ist. Wenn man nun alle nach dem Coulter-Prinzip erzeugten Impulse berücksichtigt, enthält das Histogramm eine teilweise fehlerhafte Information; denn unter den erzeugten Impulsen befinden sich einerseits elektrische Rauschsignale und andererseits Impulse, die dem Durchgang von Teilchen entsprechen, deren Bewegungsbahn gänzlich ausserhalb der Längsachse der Öffnung liegt. Die Amplitude dieser Art von Impulsen ist für das Volumen der entsprechenden Teilchen nicht kennzeichnend.

Um die Anzahl dieser Art von Impulsen zu verringern, könnte man eine vergleichsweise lange Öffnung verwenden. Dies hat jedoch zwei wichtige Nachteile: Einerseits wird eine solche Öffnung häufiger verstopft, andererseits ergeben sich öfter Zählfehler aufgrund der Tatsache, dass die Teilchen, die sich gleichzeitig in der Öffnung befinden, fälschlicherweise als ein einziges Teilchen gezählt werden. Um diese Nachteile zu vermeiden, besteht also Interesse an der Verwendung einer Messöffnung von vergleichsweise kurzer Länge, d. h. einer Länge, die gleich oder kleiner ist als der Durchmesser der Öffnung.

Ein Verfahren der eingangs genannten Art ist aus der DE-OS 25 39 864 bekannt. Dabei wird die Grösse der Teilchen durch Messung der Amplitude eines Signals ermittelt, das durch Differenzierung der abfallenden Flanke eines Impulses erzeugt wird, der dem Durchgang eines Teilchens durch die Öffnung entspricht. Mit diesem bekannten Verfahren ist es möglich, die Grösse der Teilchen genauer zu messen, als mit einer einfachen Messung der Amplitude der Impulse. Es ist jedoch mit diesem bekannten Verfahren nicht möglich, Impulse zu unterscheiden, die Teilchen entsprechen, deren Bewegungsbahn sich ausserhalb der Achse der Öffnung befindet.

Die Rauschsignale, die bei den praktischen Realisierungen die durch das Coulter-Prinzip erzeugten Impulse begleiten, sind recht schwierig zu erfassen und von den Nutzimpulsen zu trennen; denn unter den Nutzimpulsen befinden sich solche, deren Amplitude mit gewissen Rauschsignalen vergleichbar sind. Ausserdem überlagert sich das Rauschen häufig den Flanken der Teilchenimpulse und beeinträchtigt damit ihre Diskriminierung durch Verwendung von Amplitudenschwellen. Um dieses Problem zu lösen, wurde bereits vorgeschlagen, alle Impulse zu eliminieren, deren Anstiegszeit unter einem Bezugswert liegt (FR-PS 2 146 819). Hierfür wird eine Diskriminator-Schaltung verwendet, die eine Schwellenschaltung, einen Taktgeber, einen Zähler und eine Torschaltung enthält. Nichtsdestoweniger hat der ständig steigende Bedarf einer grösseren Genauigkeit und einer breiten kommerziellen Nutzung der Geräte zur Teilchenanalyse zu dem Schluss geführt, dass die Diskriminierung von Rauschsignalen verbessert werden muss.

Der Erfindung liegt die Aufgabe zugrunde, ein Verfahren und ein Gerät zu seiner Durchführung anzugeben, die eine kostengünstige Beseitigung der oben erwähnten Schwierigkeiten ermöglichen und dabei die Verwendung einer vergleichsweise kurzen Öffnung erlauben. Diese Aufgabe besteht insbesondere darin, diejenigen Impulse unterscheiden zu können, die den Durchgängen der Teilchen entsprechen, deren Bewegungsbahn sich ausserhalb der Achse der Öffnung befindet.

Diese Aufgabe wird erfindungsgemäss durch das im Patentanspruch 1 angegebene Verfahren gelöst.

Zur Durchführung dieses Verfahrens schlägt die Erfindung ein Gerät gemäss dem Patentanspruch 4 vor.

Bevorzugte Ausführungsformen des erfindungsgemässen Verfahrens sind in den Patentansprüchen 2 und 3 angegeben. Mit der Ausführungsform gemäss Anspruch 2 wird der zusätzliche Effekt erreicht, dass Rauschimpulse unterdrückt werden. Mit der Ausführungsform gemäss Anspruch 3 wird ein Signal erzeugt, dessen Amplitude sehr genau dem Volumen des erfassten Teilchens entspricht.

Zur Durchführung des Verfahrens gemäss dem Patentanspruch 2 schlägt die Erfindung ein Gerät gemäss dem Patentanspruch 5 vor.

Zur Durchführung des Verfahrens gemäss dem Patentanspruch 3 schlägt die Erfindung ein Gerät gemäss dem Patentanspruch 6 vor.

Die Verfahren und Geräte gemäss der Erfindung ermöglichen eine kostengünstige Durchführung einer korrekten Amplitudenanalyse mittels einer einfachen Schaltung. Die Diskriminierung der ausserhalb der Achse des Zählkanals befindlichen Teilchen erlaubt eine Darstellung der Verteilung der Teilchengrösse, die nicht von «Artefakten» beeinträchtigt wird, wobei eine vergleichsweise kurze Öffnung Verwendung finden kann. Die Unterdrückung der Rauschimpulse ist so wirksam, dass Öffnungen mit relativ grossem Volumen verwendet werden können. Die typischen Abmessungen können z.B. 90 µm im Durchmesser und 70 µm in der Länge sein. Durch die Verwendung einer Öffnung mit diesen Abmessungen sind plötzliche Verstopfungen der Öffnung ausgeschlossen, die sonst durch verhältnismässig dicke Teilchen verursacht werden könnten.

Durch die Integration des negativen Teils des ersten Hilfssignals erhält man ein Signal, dessen Amplitude sehr genau dem Volumen des erfassten Teilchens entspricht. Die Bildung eines Hilfssignals, das der ersten zeitlichen Ableitung des von einer der Messsonden empfangenen Impulses entspricht, erlaubt es zusätzlich, ein niederfrequentes Störsignal zu eliminieren, das im allgemeinen dem Impuls überlagert ist.

Im folgenden sei die Erfindung anhand der in den Zeichnungen dargestellten Ausführungsform näher erläutert:

Fig. 1 zeigt ein Blockschema der elektronischen Schaltungen zur Gewinnung der Nutzsignale und zur Visualisierung der in einem Gerät zur Zählung der Blutkörperchen erhaltenen Resultate, das nach dem Coulter-Detektorprinzip arbeitet,

Fig. 2 zeigt einige typische Wellenformen zur Veranschaulichung der wesentlichen Aspekte der weiter unten beschriebenen Verfahren zur Selektion und zur Bildung von Nutzsignalen,

Fig. 3 zeigt ein als Blockschaltbild dargestelltes Prinzipschema eines der beiden Wege 13a, 13b der Detektorschaltung 13 von Fig. 1,

Fig. 4 zeigt ein Blockschema der Diskriminatorschaltung 35 von Fig. 3,

Fig. 5 zeigt ein Blockschema einer bevorzugten Ausführungsform der logischen Schaltung 43 von Fig. 4,

Fig. 6 zeigt einige typische Wellenformen zur Veranschaulichung der Funktion der Diskriminatorschaltung von Fig. 4,

Fig. 7 zeigt ein Blockschema der Diskriminatorschaltung 34 von Fig. 3,

Fig. 8 zeigt ein Blockschema einer bevorzugten Ausführungsform der logischen Schaltung 72 von Fig. 7,

Fig. 9 zeigt einige typische Wellenformen zur Veranschaulichung der Funktion der Diskriminatorschaltung von Fig. 7,

Fig. 10 zeigt ein Blockschema, das durch die Vereinigung der in Fig. 3, 4 und 7 dargestellten Schaltungen entsteht.

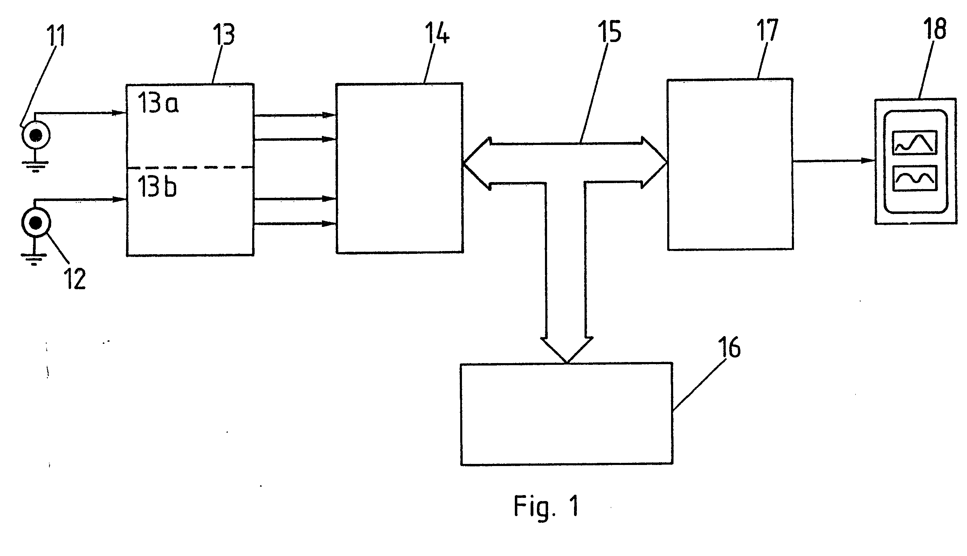

Das in Fig. 1 dargestellte Blockschema zeigt eine Sonde 11 zur Erfassung der roten Blutkörperchen und eine Sonde 12 zur Erfassung der weissen Blutkörperchen. Jede dieser Sonden besitzt eine Messöffnung, durch welche man ein vorbestimmtes Volumen der die Teilchen in Suspension enthaltenden flüssigen Probe hindurchtreten lässt. Mit diesen Sonden und einer zugeordneten (nicht dargestellten) elektrischen Messschaltung werden elektrische Impulse erzeugt, die dem Durchtritt eines (roten oder weissen) Blutkörperchens durch die Messöffnung der Sonde sowie auch elektrischem Rauschen entsprechen. Die mit jeder der Sonden erhaltenen elektrischen Impulse werden als Eingangssignale an einen der Wege 13a bzw. 13b einer elektrischen Detektorschaltung 13 angelegt. Diese Schaltung stellt fest, ob jeder Impuls an ihrem Eingang gewisse Bedingungen erfüllt und informiert daraufhin das nachgeschaltete System. Die Ausgänge der Detektorschaltung 13 sind mit einer Mehrkanal-Analysierschaltung 14 verbunden, deren Ausgangssignale eine Darstellung in Form eines Histogramms der Verteilung jeder Art der gezählen Teilchen in Abhängigkeit von ihrer Amplitude ermöglichen. Die Ausgänge der Analysierschaltung sind über einen externen Bus 15 einerseits mit einem Mikroprozessor 16 und andererseits mit einer Schaltung 17 verbunden, die die Signale für die Darstellung der genannten Histogramme auf dem Schirm eines Videomonitors 18 aufbereitet.

Die Struktur und die Funktion der Wege 13a und 13b der Detektorschaltung 13 sind im Prinzip identisch. Jeder dieser Wege umfasst Mittel zur Erfassung der Impulse, die dem Durchgang von Teilchen längs einer Bewegungsbahn ausserhalb der Längsachse der Messöffnung entsprechen, sowie vorzugsweise auch Mittel zur Erfassung der durch elektrisches Rauschen verursachten Impulse.

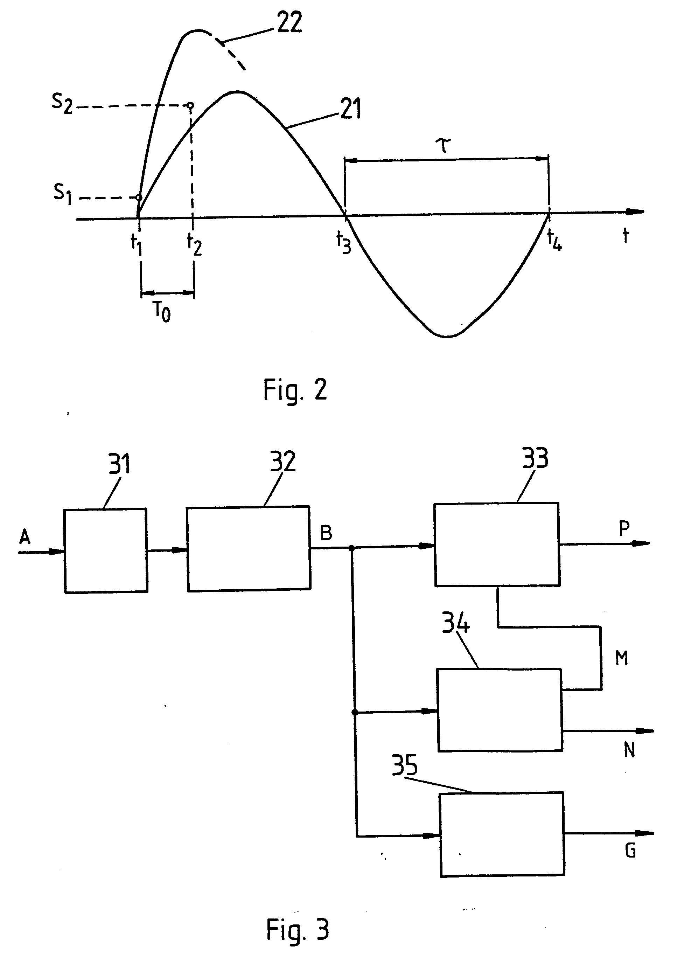

Im folgenden sei anhand von Fig. 2 das Prinzip des Verfahrens zur Erfassung eines Impulses erläutert, der dem Durchgang eines Teilchens längs einer ausserhalb der Längsachse der Messöffnung liegenden Bewegungsbahn entspricht. Fig. 2 zeigt eine typische Wellenform 21 eines Signals, das für die erste zeitliche Ableitung eines Impulses kennzeichnend ist, der dem Durchgang eines Teilchens längs einer mit der Längsachse der Messöffnung zusammenfallenden Bewegungsbahn entspricht, sowie eine typische Wellenform 22 der Vorderflanke eines Signals, das für die erste zeitliche Ableitung eines Impulses kennzeichnend ist, der dem Durchgang eines Teilchens längs einer ausserhalb dieser Achse liegenden Bewegungsbahn entspricht. Das Verfahren zur Erfassung eines solchen Impulses basiert auf der Feststellung, dass die Vorderflanke seiner ersten zeitlichen Ableitung 22 wesentlich steiler ist als diejenige der ersten Ableitung 21 eines Impulses, der dem Durchgang eines Teilchens längs der Achse der Messöffnung entspricht. Um diese Differenz auswerten zu können, bedient sich das Verfahren zur Erfassung der Impulse, die Durchgängen von Teilchen auf Bewegungsbahnen ausserhalb der Achse entsprechen, folgender Verfahrensschritte:

Zunächst wird ein erstes Hilfssignal gebildet, dessen Wellenform (wie z.B. die Signale 21 oder 22 in Fig. 2) der ersten zeitlichen Ableitung der Wellenform des jeweiligen Impulses entspricht. Anschliessend wird ein erster Zeitpunkt $t_1$ ermittelt, bei welchem die Amplitude des ersten Hilfssignals eine erste vorbestimmte Pegelschwelle $S_1$ überschreitet. Fig. 2 zeigt diesen Zeitpunkt für das Hilfssignal 22. Sodann, wird in einem zweiten Zeitpunkt $t_2$, der dem ersten Zeitpunkt $t_1$ nach einem vorbestimmten Zeitintervall $T_0$ folgt, festgestellt, ob die Amplitude des ersten Hilfssignals in diesem zweiten Zeitpunkt eine zweite vorbestimmte Pegelschwelle $S_2$ bereits überschritten hat, die grösser ist als die erste Pegelschwelle. Wenn dies der Fall ist, (wie dies z.B. für das Signal 22 in Fig. 2 zutrifft), wird der entsprechende Impuls als ein Impuls mit der Amplitude Null gezählt.

Das vorangehend beschriebene Verfahren wird vorzugsweise mit dem im folgenden anhand von Fig. 2 beschriebenen Verfahren zur Erfassung eines Rauschimpulses kombiniert. Dieses Verfahren basiert auf der Feststellung, dass das Intervall $\tau$ des Signals 21, welches die Ableitung eines dem Durchgang eines Teilchens durch die Öffnung entsprechenden Impulses darstellt, wesentlich länger ist als das entsprechende Intervall in einem Signal, das die erste Ableitung eines Rauschimpulses darstellt. Um diese Differenz auswerten zu können, bedient sich das Verfahren zur Erfassung der Rauschimpulse der folgenden Verfahrensschritte:

Nach der Bildung des ersten Hilfssigals 21 oder 22 in Fig. 2, dessen Wellenform der ersten zeitlichen Ableitung der Wellenform des jeweiligen Impulses entspricht, vergleicht man das Zeitintervall $\tau$, das zwischen einem dritten durch den Punkt mit der Steigung Null beim Maximalwert des Impulses definierten Zeitpunkt $t_3$ und einem vierten Zeitpunkt $t_4$ liegt, der durch den Punkt des ersten Hilfssignals definiert ist, der dem Ende der absteigenden Flanke des Impulses entspricht und bei dem das erste Hilfssignal den Wert Null erreicht, mit einer vorbestimmten Zeitschwelle $T_1$. Falls das gemessene Zeitintervall $\tau$ kürzer ist als die genannte Zeitschwelle $T_1$, zählt man den Impuls nicht und berücksichtigt die von ihm verkörperte Information nicht. Im entgegengesetzten Fall, d.h. wenn das gemessene Zeitintervall $\tau$ gleich oder grösser ist als die Zeitschwelle $T_1$, zählt man den Impuls als einen ein Teilchen repräsentierenden Impuls und berücksichtigt die von ihm verkörperte Information.

Es sei darauf hingewiesen, dass das erstgenannte Verfahren unabhängig vom zuletzt beschriebenen Verfahren durchgeführt werden kann. Ihre Kombination bringt indessen Vorteile. Das ist der Grund dafür, dass in der folgenden Beschreibung eine Ausführungsform vorgestellt wird, bei der beide Detektorverfahren verwendet werden.

Zur Durchführung der anhand von Fig. 2 erläuterten Detektorverfahren und zur Bildung von Ausgangssignalen, die die Herleitung von «Ausgangsnutzsignalen» ermöglichen, d.h. solcher Signale, die den Durchgang von Teilchen durch die Längsachse der Messöffnung entsprechen, besteht jeder Weg 13a und 13b der Detektorschaltung 13 in dem Schema gemäss Fig. 1 aus den in Fig. 3 dargestellten Blöcken.

Jeder von den Sonden 11 und 12 gelieferte Impuls A wird in einem Verstärker 31 verstärkt. Der verstärkte Impuls wird dem Eingang einer Differenzierschaltung 32 zugeführt, die ein Ausgangssignal B erzeugt, dessen zeitlicher Verlauf der ersten zeitlichen Ableitung der Wellenform des Impulses A entspricht. Dieses Signal B wird an die Eingänge dreier Hilfsschaltungen angelegt, nämlich

- eines Integrators 33,
- einer Diskriminatorschaltung 34, mittels derer festgestellt wird, ob der Impuls A ein elektrischer Rauschimpuls ist oder ob es sich um einen Impuls handelt, der dem Durchgang eines Teilchens durch die Messöffnung entspricht,
- sowie einer Diskriminatorschaltung 35, mittels derer festgestellt wird, ob der Impuls A ein Impuls ist, der dem Durchgang eines Teilchens auf einer ausserhalb der Längsachse der Messöffnung verlaufenden Bewegungsbahn entspricht oder ob es sich um ein Teilchen handelt, dessen Bewegungsbahn mit der genannten Achse zusammenfällt oder zumindest ihr sehr nahe liegt.

In Abhängigkeit von dem Ergebnis dieser Feststellungen liefern die Diskriminatoren 34 und 35 dem nachgeschalteten System entsprechende Signale N und G.

Im Fall eines Impulses A, der dem Durchgang eines Teilchens durch die Messöffnung entspricht, liefert die von einem Signal M des Diskriminators 34 gesteuerte Integratorschaltung 33 an ihrem Ausgang ein Signal P, welches für das Integral des negativen Teils des Signals B kennzeichnend ist. Die Amplitude dieses Signals entspricht sehr genau dem Volumen des entsprechenden Teilchens.

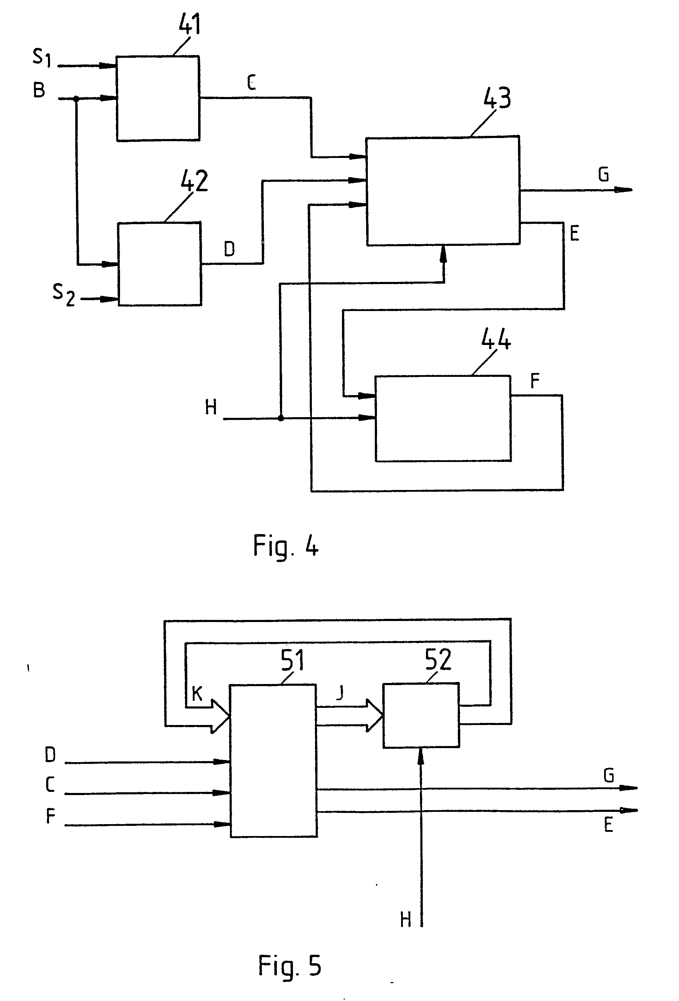

Die Struktur und die Funktion einer bevorzugten Ausführungsform der Diskriminatorschaltung 35 in Fig. 3 wird im folgenden anhand von Fig. 4, 5 und 6 näher beschrieben.

Wie in dem Blockschema des in Fig. 4 dargestellten Diskriminators 35 gezeigt wird, wird das Signal B am Ausgang der Differenzierschaltung 32 (Fig. 3) als Eingangssignal zwei Komparatoren 41 und 42 zugeführt. Der Komparator 41 vergleicht das Signal B mit einer ersten Schwellenspannung $S_1$, die eine Grössenordnung von 100 mV hat. Der Komparator 42 vergleicht das Signal B mit einer zweiten Schwellenspannung $S_2$, die eine Grössenordnung von 5 V hat. Je nach dem Resultat des Vergleichs liefert der jeweilige Komparator 41 bzw. 42 ein logisches Ausgangssignal C bzw. D an einen entsprechenden Eingang einer logischen Steuerschaltung 43. Einem weiteren Eingang der logischen Schaltung 43 werden Taktsignale H zugeführt. Dieselben Taktsignale liegen an einem Eingang eines Zählers 44 an, der zwischen einen Ausgang und einen Eingang der logischen Schaltung 43 geschaltet ist. Der Zähler 44 ist ein 4-Bit-Binärzähler, der ein festes Zeitintervall $T_0$ von der Grössenordnung 7 µs liefert, welches ein Vielfaches der Signalperiode des Taktsignals ist. Der Zähler 44 wird durch ein von der logischen Schaltung 43 geliefertes Steuersignal E voreingestellt. Am Ende des Zählvorganges liefert der Zähler 44 an einen Eingang der logischen Schaltung 43 ein logisches Signal F, das für diesen Vorgang kennzeichnend ist.

Die in Fig. 4 dargestellte Diskriminatorschaltung 35 liefert an ihrem Ausgang ein logisches Signal G, das von der logischen Steuerschaltung 43 erzeugt wird. Dieses Signal informiert das nachgeschaltete System, ob ein Impuls gegeben ist, der dem Durchgang eines Teilchens entspricht, dessen Bewegungsbahn mit der Achse der Messöffnung zusammenfällt oder dieser sehr nahe liegt, oder ob ein Impuls vorliegt, der dem Durchgang eines Teilchens entspricht, das sich ausserhalb der Achse bewegt.

Fig. 5 zeigt eine bevorzugte Realisierungsform der logischen Steuerschaltung 43. Die Schaltung umfasst einen Festspeicher oder ein PROM 51 sowie eine Anordnung bistabiler SR-(«set-reset»)-Kippstufen 52. Der Speicher 51 ist derart programmiert, dass er zusammen mit den bistabilen Kippstufen 52 eine getaktete sequentielle Schaltung für die Durchführung der Funktionen der logischen Steuerschaltung 43 bildet. Der Speicher 51 empfängt an seinen Eingängen einerseits die logischen Signale C, D und F, die von den Komparatoren 41 bzw. 42 bzw. von dem Zähler 44 abgegeben werden, und andererseits eine Gruppe von Signalen K, die binären Variablen entsprechen, die zur Speicherung der inneren Zustände des Systems verwendet werden. Der Speicher 51 liefert an seinen Ausgängen einerseits die Signale G und E, die die Ausgangssignale der logischen Schaltung 43 bilden und andererseits eine Gruppe von Signalen J, die binären Variablen entsprechen, welche zur Speicherung der inneren Zustände des Systems verwendet werden.

Alle Kippstufen der Anordnung 52 empfangen die Taktsignale H. Nach dem Auftreten der aktiven Flanke eines Taktsignals liefert die Gesamtheit der Kippstufen 52 für die von der Signalgruppe J repräsentierten Eingangszustände die von der Signalgruppe K repräsentierten Ausgangszustände.

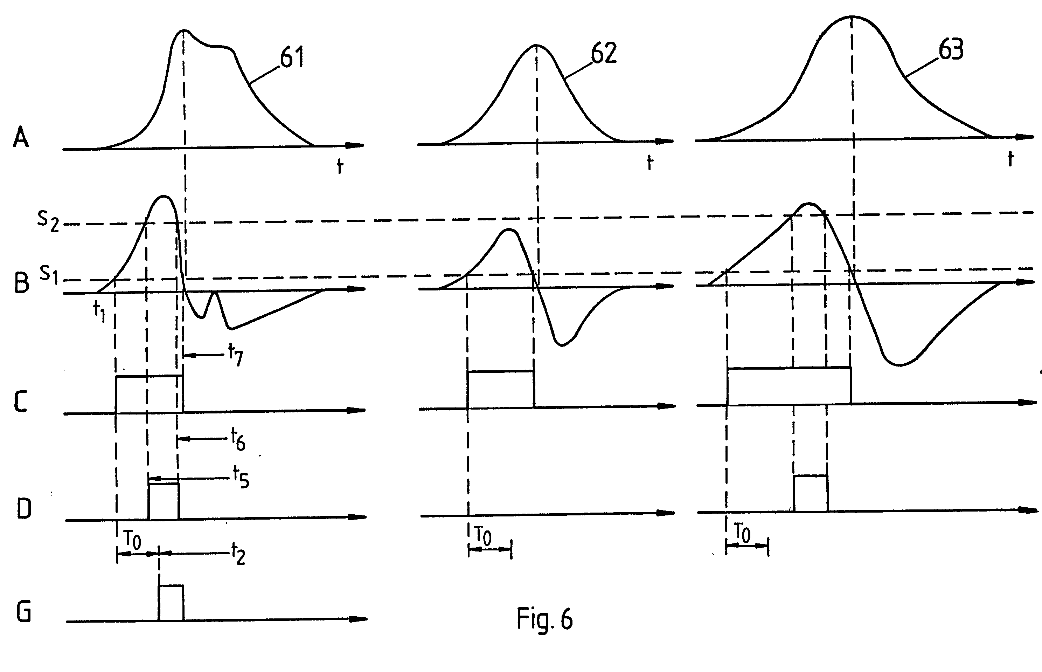

Die Funktion der in Fig. 4 dargestellten Diskriminatorschaltung sei im folgenden mit Hilfe der in Fig. 6 gezeigten Wellenformen näher erläutert.

In dem oberen Teil von Fig. 6 sind drei typische Wellenformen der Impulse A dargestellt, die jeweils dem Durchgang eines Teilchens durch die Messöffnung entsprechen. Die Welle 61 entspricht dem Durchgang eines Teilchens ausserhalb der Achse. Die Wellenform 62 entspricht dem Durchgang eines relativ kleinen Teilchens längs der Longitudinalachse der Öffnung. Die Wellenform 63 entspricht dem Durchgang eines grösseren Teilchens längs der genannten Achse. Im Fall der in Fig. 6 dargestellten Wellenformen 61 und 63 überschreiten die entsprechenden Signale B die zweite Spannungsschwelle und verursachen damit Impulse D an dem Ausgang des Komparators 42. Der Anfang und das Ende des Impulses D wird durch die Zeitpunkte $t_5$ bzw. $t_6$ bestimmt, zu welchen das Signal B die zweite Schwellenspannung $S_2$ überschreitet. Jeder Impuls D wird auch an einen Eingang der logischen Steuerschaltung 43 angelegt. Da das einem Impuls A mit der Wellenform 62 entsprechende Signal B die zweite Schwellenspannung nicht erreicht, verursacht es auch keinen Impuls D.

Für jede dieser Wellenformen der Impulse A zeigt Fig. 6 die entsprechenden Signale B und C. B erscheint am Ausgang der Differenzierschaltung 32 und C am Ausgang des Komparators 41. Der Anfang und das Ende des Impulses C werden durch die Zeitpunkte $t_1$ bzw. $t_7$ bestimmt, in denen das Signal B die erste Schwellenspannung $S_1$ überschreitet. Der Impuls C wird einem Eingang der logischen Steuerschaltung 43 zugeführt. Die Vorderflanke des Impulses C bestimmt den Zeitpunkt $t_1$ und löst in der Schaltung 43 die weiter unten beschriebenen Analysevorgänge für jede der Wellenformen 61, 62 und 63 der Impulse A aus.

In einem Zeitpunkt $t_2 = t_1 + T_0$, (worin $T_0$ ein festes durch das Zählen des Zählers 44 bestimmtes Zeitintervall bedeutet) prüft die logische Steuerschaltung 43 das Vorhandensein oder das Nichtvorhandensein eines Impulses D, der einem am Eingang der Differenzierschaltung 32 empfangenen Impuls A entspricht. Je nach der Wellenform des Impulses A kann diese Prüfung folgende Resultate ergeben:

– Für eine Wellenform wie 61, die dem Durchgang eines Teilchens ausserhalb der Achse entspricht, stellt die Schaltung 43 fest, dass der Impuls D vorhanden ist und erzeugt daraufhin an ihrem Ausgang einen Impuls G, mittels dessen die Schaltung 43 das nachgeschaltete System darüber informiert, dass der Impuls A mit der Wellenform 61 als ein Impuls mit der Amplitude Null gezählt werden muss. Auf diese Weise wird der Impuls für die korrekte Zählung der Teilchenzahl berücksichtigt, die die Öffnung durchdringen, die Wellenform 61 wird jedoch nicht als für das Volumen des Teilchens repräsentativ behandelt.

– Für eine Wellenform wie 62, die dem Durchgang eines verhältnismässig kleinen Teilchens längs der Achse der Öffnung entspricht, erreicht das Signal B die zweite Schwellenspannung $S_2$ nicht, so dass kein Impuls D erzeugt wird. Die Schaltung 43 liefert daraufhin keinen Impuls G und informiert das nachgeschaltete System, dass die Welle 62 ein gültiger Impuls ist, d.h. ein Impuls, der eine hinreichend genaue Information über das Volumen des Teilchens beinhaltet.

– Für eine Wellenform wie 63, die einem axialen Durchgang eines grösseren Teilchens entspricht, überschreitet das Signal B die zweite Schwellen-

spannung $S_2$ und verursacht einen entsprechenden Impuls D. Dieser Impuls erscheint jedoch nach dem Zeitpunkt $t_2 = t_1 + T_0$. Die logische Schaltung 43 stellt dies fest, erzeugt daraufhin keinen Impuls G und informiert so das nachgeschaltete System, dass die Welle 63 ein gültiger Impuls ist.

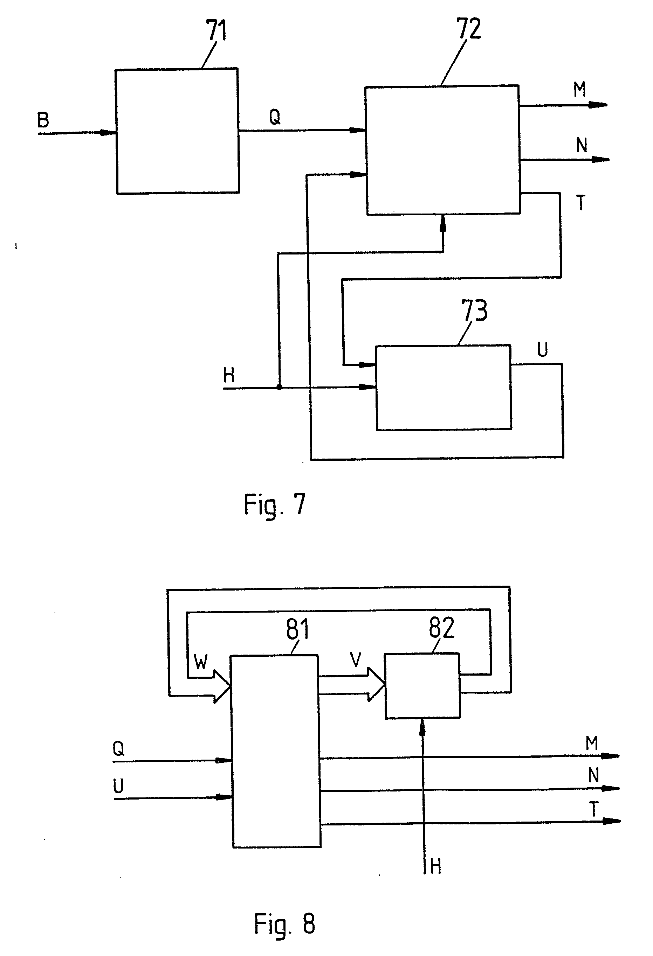

Struktur und Funktion eines bevorzugten Ausführungsbeispiels der Diskriminatorschaltung 34 in Fig. 3 seien im folgenden anhand von Fig. 7, 8 und 9 näher beschrieben:

Wie aus dem in Fig. 7 dargestellten Blockschema des Detektors 34 hervorgeht, wird das am Ausgang der Differenzierschaltung 32 (Fig. 3) anliegende Signal B einem Eingang eines Komparators 71 zugeführt, der das Signal B mit einer Pegelschwelle mit dem Wert Null vergleicht. Das logische Ausgangssignal Q dieses Komparators wird einem von zwei Eingängen einer logischen Steuerschaltung 72 zugeführt. Einem Eingang der logischen Schaltung 72 und einem Eingang eines Zählers 73, der zwischen einen Ausgang und einen Eingang der logischen Schaltung 72 eingefügt ist, werden Taktsignale H zugeführt. Der Zähler 73 ist ein 4-Bit-Binärzähler, der ein festes Zeitintervall $T_1$ definiert, das in der Grössenordnung von 10 µs liegt und ein Vielfaches der Periode des Taktsignals ist. Der Zähler 73 wird durch ein von der logischen Schaltung 72 geliefertes Steuersignal T auf einen Zählwert voreingestellt. Beim Ende des Zählvorganges liefert der Zähler 73 an einen Eingang der logischen Schaltung 72 ein logisches Signal U, das für diesen Vorgang kennzeichnend ist.

Die in Fig. 7 dargestellte Diskriminatorschaltung 34 liefert als Ausgangssignale einerseits das von der logischen Schaltung 72 an einen Eingang des Integrators 33 (Fig. 3) abgegebene Steuersignal M und andererseits ein von der logischen Schaltung 72 abgegebenes logisches Signal N. Wenn dieses Signal auftritt, informiert es das nachgeschaltete System entweder über das Vorhandensein eines Analogsignals P, das einem gültigen, für das Volumen des zugeordneten Teilchens kennzeichnenden Impulses entspricht und für die Analyse in Betracht gezogen werden kann, oder über das Vorhandensein eines Rauschimpulses.

Fig. 8 zeigt eine bevorzugte Ausführungsform der logischen Steuerschaltung 72. Diese Schaltung umfasst einen Festspeicher oder ein PROM 81 sowie eine Anordnung von bistabilen SR-Kippschaltungen 82. Der Speicher 81 ist derart programmiert, dass er mit der Gruppe der Kippschaltungen eine getaktete sequentielle Schaltung zur Steuerung der Funktionen der logischen Steuerschaltung 72 bildet. Als Eingangssignal empfängt der Speicher 81 einerseits die logischen Signale Q und U, die von dem Komparator 71 bzw. von dem Zähler 73 abgegeben werden, und andererseits eine Gruppe von Signalen W, die den zur Speicherung der inneren Zustände des Systems verwendeten binären Variablen entsprechen.

Der Speicher 81 liefert an seinen Ausgängen einerseits die Signale M, N und T, die die Ausgangssignale der logischen Schaltung 72 darstellen, und andererseits eine Gruppe von Signalen V, welche binären Variablen entsprechen, die zur Speicherung der inneren Zustände des Systems verwendet werden.

Alle Kippschaltungen der Anordnung 82 empfangen die Taktsignale H. Nach dem Auftreten der aktiven Flanke eines Taktsignals liefert die Anordnung der Kippschaltungen 82 für die von der Gesamtheit der Signale V repräsentierten Eingangszustände die von der Gesamtheit der Signale W repräsentierten Ausgangszustände.

Die oben anhand von Fig. 5 bzw. 8 beschriebenen Konfigurationen der logischen Steuerschaltungen 43 und 72 sind besonders vorteilhaft, da sie mit vergleichsweise einfachen Strukturen eine anpassungsfähige Funktionsweise ermöglichen.

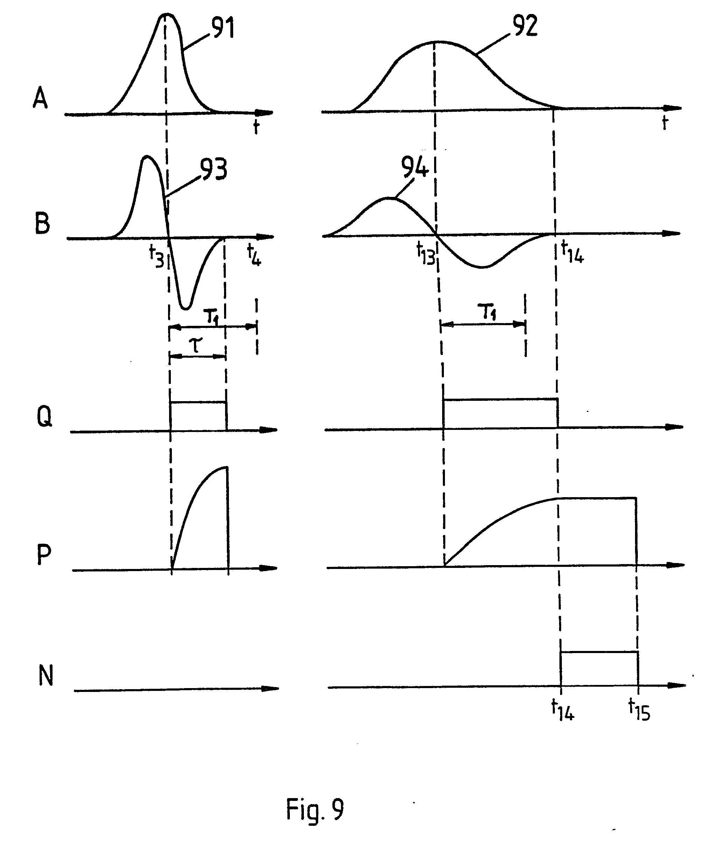

Die Funktion der in Fig. 7 dargestellten Diskriminatorschaltung 34 sei im folgenden anhand der in Fig. 9 dargestellten Wellenformen beschrieben:

Im oberen Teil von Fig. 9 sind zwei unterschiedliche Wellenformen für die Impulse A am Eingang der Differenzierschaltung 32 (Fig. 3) dargestellt. Der Impuls 91 ist ein elektrischer Rauschimpuls. Der Impuls 92 entspricht dem Durchgang eines Teilchens durch die Messöffnung.

Beim Auftreten eines Rauschimpulses wie 91 erzeugt die Differenzierschaltung 32 ein Signal B mit der Wellenform 93. Der Komparator 71 liefert einen entsprechenden Impuls Q, der dieselbe Dauer hat wie der negative Teil des Signals B und der von dem Zeitpunkt $t_3$ bis zu dem Zeitpunkt $t_4$ reicht. Von $t_3$ bis $t_4$ liefert die logische Schaltung 72 an den Integrator 33 das Steuersignal M und bewirkt so die Integration des Signals B über dieses Intervall. Im Zeitpunkt $t_3$ löst die logische Schaltung 72 mit Hilfe des Steuersignals T die Zeitzählung durch den Zähler 73 aus. Im Zeitpunkt $t_4$, der dem Ende des Impulses Q für das Signal 93 entspricht, stellt die logische Schaltung 72 fest, dass der Zähler 73 seinen Zählzyklus der Dauer $T_1$ noch nicht beendet hat, weist daraufhin den Impuls 91 zurück, indem an seinem Ausgang kein einen gültigen Impuls anzeigendes Signal N auftritt, setzt den Integrator 33 und den Zähler 73 auf Null zurück und steht damit wieder zur Behandlung eines neuen Impulses bereit.

Bei einem Eingangsimpuls wie dem Impuls 92, erzeugt die Differenzierschaltung 32 ein Signal B mit der Wellenform 94. Der Komparator 71 erzeugt einen entsprechenden Impuls Q. Zwischen den Zeitpunkten $t_{13}$ und $t_{14}$ führt die Diskriminatorschaltung von Fig. 7 die gleichen Operationen aus wie zwischen den Zeitpunkten $t_3$ und $t_4$. In diesem Fall stellt die logische Schaltung 72 fest, dass der Zähler 73 im Zeitpunkt $t_{14}$ den Zählzyklus mit der Dauer $T_1$ bereits vollendet hat und liefert an ihrem Ausgang ein logisches Signal N, das dafür kennzeichnend ist, dass die Wellenform 94 einem gültigen Impuls A entspricht, und informiert so das nachgeschaltete System, dass am Ausgang des Integrators 33 ein gültiges Analogsignal P zur Analyse bereitsteht. Nach einem von $t_{14}$ bis $t_{15}$ reichenden Zeitintervall, in welchem das nachgeschaltete System das Signal P behandeln kann, wird der Integrator 61 auf Null zurückgestellt. Im

Zeitpunkt $t_{15}$ initialisiert sich die Diskriminatorschaltung von Fig. 9 und steht somit wieder zur Behandlung eines neuen an seinem Eingang auftretenden Impulses B bereit.

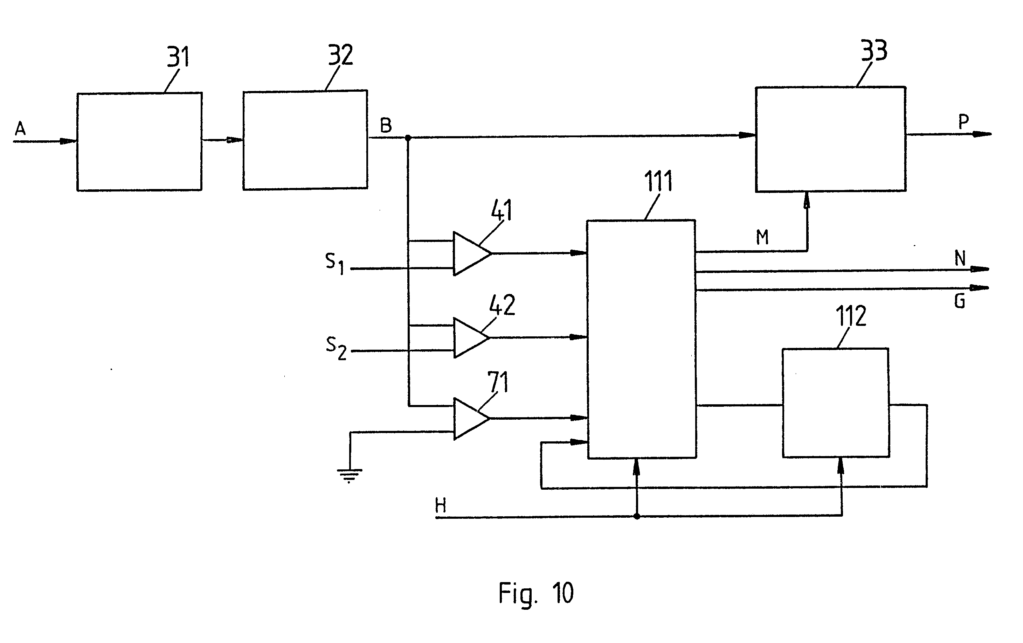

Fig. 10 zeigt ein Blockschema eines der Wege 13a oder 13b der Detektorschaltung 13 von Fig. 1. Die Schaltung enthält alle Schaltungsblöcke, die notwendig sind, um Impulse zu erfassen, die dem Durchgang von Teilchen entsprechen, deren Bewegungsbahn ausserhalb der Längsachse der Öffnung verläuft, und um Rauschimpulse zurückzuweisen. Man erkennt, dass dieses Schaltungsschema einer Vereinigung der in Fig. 3, 4 und 7 dargestellten Schaltungsblöcke entspricht. In dem Schema von Fig. 10 umfasst der Block 111 die logischen Steuerschaltungen 43 und 72 von Fig. 4 bzw. 7. In analoger Weise umfasst der Block 112 von Fig. 10 die Zähler 44 und 73 von Fig. 4 bzw. 7.

Im folgenden sei beispielhaft die Zählung roter Blutkörperchen betrachtet, für die man mit den folgenden Grössen gute Resultate erzielt:

a) Hydrodynamische Grössen:
Volumen der analysierten Flüssigkeit: 400 µl
Verdünnungsfaktor der roten Blutkörperchen: 50 000
Druckdifferenz zwischen den beiden Seiten der Öffnung: $2.10^4$ Pa
Mit diesen Werten liegt die Zählzeit in der Grössenordnung von 12 Sekunden.

b) Elektrische Grössen:
An die zu beiden Seiten der Messöffnung plazierten Elektroden angelegte Spannung: 40 V
Spannungsverstärkung des Verstärkers 31, (Fig. 3 und 10): 4000
$S_1 = 100$ mV
$S_2 = 5$ V.
Die Werte $S_1$ und $S_2$ sind dem Volumen im Innern der Messöffnung des Gerätes proportional.

c) Zeitgrössen:
$T_0 = 7$ µs
$T_1 = 10$ µs
Die Werte von $T_0$ und $T_1$ sind der Durchgangsgeschwindigkeit der Teilchen durch die Messöffnung des Gerätes umgekehrt proportional. Die oben angegebenen Werte gelten für eine Messöffnung mit einem Durchmesser von 90 µm und einer Länge von 70 µm und für eine Druckdifferenz von $2.10^4$ Pa zwischen den beiden Seiten der genannten Öffnung.

**Patentansprüche**

1. Verfahren zur Analyse von Teilchen, die in einer Flüssigkeit mit einer von der Leitfähigkeit der Teilchen abweichenden Leitfähigkeit suspendiert sind, insbesondere zur Analyse von Blutkörperchen, mit folgenden Verfahrensschritten:

a) die Flüssigkeit wird durch eine Öffnung getrieben,

b) zwischen zwei Elektroden, die beiderseits der Öffnung angeordnet und an einen Messkreis angeschlossen sind, wird ein elektronisches Signal angelegt,

c) elektrische Impulse (A) werden gebildet, die den von dem Durchgang der Teilchen durch die Öffnung verursachten Pegeländerungen des Signals entsprechen,

d) ein erstes Hilfssignal (B) wird gebildet, dessen Wellenform der ersten zeitlichen Ableitung der Wellenform des jeweiligen Impulses (A) entspricht,

e) ein erster Zeitpunkt ($t_1$) wird ermittelt, bei welchem die Amplitude des ersten Hilfssignals eine erste, vorbestimmte Pegelschwelle ($S_1$) überschreitet, gekennzeichnet durch die folgenden weiteren Verfahrensschritte:

f) es wird zu einem zweiten Zeitpunkt ($t_2$) geprüft, der dem ersten Zeitpunkt ($t_1$) nach einem vorbestimmten Zeitintervall ($T_0$) folgt, ob die Amplitude des ersten Hilfssignals (B) in diesem zweiten Zeitpunkt eine zweite vorbestimmte Pegelschwelle ($S_2$) bereits überschritten hat, die grösser ist als die erste Pegelschwelle ($S_1$), und

g) der Impuls (A) wird als ein Impuls mit der Amplitude Null gezählt, falls die Amplitude des ersten Hilfssignals (B) in dem zweiten Zeitpunkt ($t_2$) die zweite Pegelschwelle ($S_2$) überschritten hat.

2. Verfahren nach Anspruch 1, gekennzeichnet durch die folgenden weiteren Verfahrensschritte:

h) das Zeitintervall ($\tau$), das sich zwischen einem dritten, durch den Punkt mit der Steigung Null beim Maximalwert des Impulses (A) definierten Zeitpunkt ($t_3$) und einem vierten Zeitpunkt ($t_4$) erstreckt, der durch den Punkt des ersten Hilfssignals (B) definiert ist, der dem Ende der abfallenden Flanke des Impulses (A) entspricht und bei dem das erste Hilfssignal (B) den Wert Null erreicht, wird mit einer vorbestimmten Zeitschwelle ($T_1$) verglichen,

i) falls das gemessene Zeitintervall ($\tau$) kürzer ist als die genannte Zeitschwelle ($T_1$), wird der Impuls (A) nicht gezählt, und die von ihm verkörperte Information wird nicht berücksichtigt, oder

j) falls das gemessene Zeitintervall ($\tau$) gleich oder grösser ist als die Zeitschwelle ($T_1$), wird der Impuls (A) als ein einem Teilchen entsprechender Impuls gezählt, und die von diesem Impuls verkörperte Information wird berücksichtigt.

3. Verfahren nach Anspruch 1 oder 2, gekennzeichnet durch folgenden weiteren Verfahrensschritt:

– ein Signal wird gebildet, dessen Amplitude dem Integral eines Teils des ersten Hilfssignals (B) entspricht, der zwischen einem dritten, durch den Punkt mit der Steigung Null beim Maximalwert des Impulses (A) definierten Zeitpunkt ($t_3$) und einem vierten Zeitpunkt ($t_4$) liegt, der durch den Punkt des ersten Hilfssignals (B) definiert ist, der dem Ende der abfallenden Flanke des Impulses (A) entspricht und bei dem das erste Hilfssignal (B) den Wert Null erreicht.

4. Gerät zur Durchführung des Verfahrens nach Anspruch 1, mit einem Impulsdetektor (35), zur Erfassung von elektrischen Impulsen (A), die je einem Durchgang eines Teilchens durch eine Messöffnung entsprechen, welcher Impulsdetektor folgende Schaltungsteile beinhaltet:

– eine Differenzierschaltung (32) zur Bildung des ersten Hilfssignals (B), dessen Wellenform der ersten zeitlichen Ableitung der Wellenform des jeweiligen Impulses (A) entspricht,

– einen mit dem Ausgang der Differenzierschaltung (32) verbundenen ersten Komparator (41) zur Ermittlung eines ersten Zeitpunktes ($t_1$), bei welchem die Amplitude des ersten Hilfssignals (B) eine erste vorbestimmte Pegelschwelle ($S_1$) überschreitet, und zur Erzeugung eines entsprechenden Ausgangssignals, gekennzeichnet durch

– einen mit dem Ausgang der Differenzierschaltung (32) verbundenen zweiten Komparator (42) zur Ermittlung eines zweiten Zeitpunktes ($t_2$), in welchem das erste Hilfssignal (B) eine vorbestimmte zweite Pegelschwelle ($S_2$) überschreitet, die grösser ist als die erste Pegelschwelle ($S_1$), und zur Erzeugung eines entsprechenden Ausgangssignals,

– eine mit den Ausgängen der beiden Komparatoren (41, 42) verbundene logische Schaltung (43), und

– einen zwischen einen Ausgang und einen Eingang der logischen Schaltung (43) eingeschalteten Zähler (44) zur Bildung eines Ausgangssignals in Form eines Impulses, dessen Dauer ein mit dem genannten ersten Zeitpunkt ($t_1$) beginnendes, vorbestimmtes Zeitintervall ($T_0$) definiert,

wobei die logische Schaltung (43) die Zählung des am Eingang der Differenzierschaltung (32) empfangenen Impulses als einen Impuls mit der Amplitude Null bewirkt, falls der zweite Zeitpunkt ($t_2$) in das durch den Zähler (44) definierte Zeitintervall ($T_0$) fällt.

5. Gerät nach Anspruch 4, gekennzeichnet durch einen zusätzlichen Impulsdetektor (34), der folgende Schaltungsteile beinhaltet:

– eine mit dem Ausgang der Differenzierschaltung (32) verbundene weitere Komparatorschaltung (71) zur Erzeugung eines Ausgangssignals, dessen Dauer ($\tau$) sich von einem dritten Zeitpunkt ($t_3$), der durch den Punkt mit der Steigung Null beim Maximalwert des Impulses definiert ist, bis zu einem vierten Zeitpunkt ($t_4$) erstreckt, der durch den Punkt des ersten Hilfssignals definiert ist, der dem Ende der abfallenden Flanke des Impulses entspricht und bei dem das erste Hilfssignal den Wert Null erreicht,

– eine mit dem Ausgang der weiteren Komparatorschaltung (71) verbundene weitere logische Schaltung (72), und

– einen zwischen einen Ausgang und einen Eingang der weiteren logischen Schaltung (72) eingeschalteten weiteren Zähler (73) zur Erzeugung eines Ausgangssignals, das einen Impuls darstellt, dessen Dauer durch ein mit dem dritten Zeitpunkt ($t_3$) beginnendes, vorbestimmtes Zeitintervall ($T_1$) definiert ist, wobei die weitere logische Schaltung (72) zur Steuerung folgender Operationen dient:

– keine Zählung des am Eingang der Differenzierschaltung (32) empfangenen Impulses und keine Berücksichtigung der ihm entsprechenden Information, falls die abfallende Flanke des Impulses am Ausgang der weiteren Komparatorschaltung (71) in das vorbestimmte Zeitintervall ($T_1$) fällt, oder

– Zählung des am Eingang der Differenzierschaltung (32) empfangenen Impulses als Repräsentant eines Teilchens, falls die abfallende Flanke des Impulses am Ausgang der weiteren Komparatorschaltung (71) ausserhalb des Zeitintervalls ($T_1$) liegt.

6. Gerät nach Anspruch 5, gekennzeichnet durch eine Integrierschaltung (33), die mit einem ersten Eingang an den Ausgang der Differenzierschaltung (32) und mit einem zweiten Eingang an einen Ausgang der weiteren logischen Schaltung (72) angeschlossen ist und die zur Bildung eines Ausgangssignals dient, dessen Amplitude dem Integral eines zwischen dem dritten Zeitpunkt ($t_3$) und dem vierten Zeitpunkt ($t_4$) liegenden Teils des ersten Hilfssignals (B) entspricht.

**Claims**

1. A method for the analysis of particles in suspension in a fluid having a conductivity different from that of the particles, in particular for the analysis of blood particles, including the following steps:

a) the fluid is driven through an orifice,

b) an electronic signal is applied across two electrodes which are arranged on either side of the orifice and are connected to a measuring circuit,

c) electrical pulses (A) corresponding to the changes in the signal level caused by the passage of particles through the orifice are produced,

d) a first auxiliary signal (B) is produced, the waveshape of which corresponds to the first derivative with respect to time of the waveshape of each pulse (A),

e) a first instant ($t_1$) is detected at which the amplitude of the first auxiliary signal exceeds a predetermined first threshold level ($S_1$), this method being characterized by the following further steps:

f) at a second instant ($t_2$), which follows at a predetermined time interval ($T_0$) after the first instant ($t_1$), it is checked whether the amplitude of the first auxiliary signal (B) at the said second instant has already exceeded a second predetermined threshold level ($S_2$) which is greater than the first threshold level ($S_1$), and

g) if the amplitude of the first auxiliary signal (B) has exceeded the second threshold level ($S_2$) at the second instant ($t_2$), the pulse (A) is counted as a pulse of zero amplitude.

2. A method according to claim 1, characterized by the following further steps:

h) the time interval ($\tau$) extending between a third instant ($t_3$), defined by the point of the zero slope at the peak of the pulse (A), and a fourth instant ($t_4$), defined by the point in the first auxiliary signal (B) which corresponds to the end of the trailing edge of the pulse (A) and where the first auxiliary signal (B) reaches zero value, is compared with a predetermined threshold period ($T_1$),

i) if the measured time interval ($\tau$) is shorter than the said threshold period ($T_1$), the pulse (A) is not counted and the information contained in that pulse is not taken into consideration, or

j) if the measured time interval ($\tau$) is equal to or longer than the threshold period ($T_1$), the pulse (A) is counted as being representative of a particle and the information contained in that pulse is taken into consideration.

3. A method according to claim 1 or 2, characterized by the following further step:

– a signal is produced, the amplitude of which corresponds to the integral of a part of the first auxiliary signal (B) located between a third instant ($t_3$), defined by the point of the zero slope at the peak of the pulse (A), and a fourth instant ($t_4$), defined by the point in the first auxiliary signal (B) which corresponds to the end of the trailing edge of the pulse (A) and where the first auxiliary signal (B) reaches zero value.

4. A device for carrying out the method according to claim 1, containing a pulse detector (35) for detecting electrical pulses (A) which in each case correspond to the passage of one particle through a measuring orifice, which pulse detector includes the following circuit sections:

– a differentiation circuit (32) for producing the first auxiliary signal (B), the waveshape of which corresponds to the first derivative with respect to time of the waveshape of each pulse (A),

– a first comparator (41) connected to the output of the differentiation circuit (32) for detecting a first instant ($t_1$) at which the amplitude of the first auxiliary signal (B) exceeds a predetermined first threshold level ($S_1$), and for producing a corresponding output signal, characterized by

– a second comparator (42) connected to the output of the differentiation circuit (32) for detecting a second instant ($t_2$) at which the first auxiliary signal (B) exceeds a second predetermined threshold level ($S_2$), which is higher than the first threshold level ($S_1$), and for producing a corresponding output signal,

– a logic circuit (43) connected to the outputs of the two comparators (41, 42) and

– a counter (44) connected between an output and an input of the logic circuit (43) for forming an output signal in the form of a pulse, the duration of which defines a predetermined time interval ($T_0$) starting from the said first instant ($t_1$),

in which arrangement the logic circuit (43) effects the counting of the pulse received at the input of the differentiation circuit (32) as a pulse of zero amplitude if the second instant ($t_2$) falls within the time interval ($T_0$) defined by the counter (44).

5. A device according to claim 4, characterized by an additonal pulse detector (34) which includes the following circuit sections:

– a further comparator circuit (71) connected to the output of the differentiation circuit (32) for producing an output signal, the duration ($\tau$) of which extends from a third instant ($t_3$), defined by the point of the zero slope at the peak of the pulse, to a fourth instant ($t_4$), defined by the point in the first auxiliary signal which corresponds to the end of the trailing edge of the pulse and where the first auxiliary signal reaches zero level,

– a further logic circuit (72) connected to the output of the further comparator circuit (71) and

– a further counter (73) connected between an output and an input of the further logic circuit (72) for producing an output signal which represents a pulse, the duration of which is defined by a predetermined time interval ($T_1$) starting from the third instant ($t_3$), in which arrangement the further logic circuit (72) is used for controlling the following operations:

– not counting the pulse received at the input of the differentiation circuit (32) and not taking into consideration the information relating to the pulse if the trailing edge of the pulse at the output of the further comparator circuit (71) falls within the predetermined time interval ($T_1$), or

– counting the pulse received at the input of the differentiation circuit (32) as being representative of a particle if the trailing edge of the pulse at the output of the further comparator circuit (72) falls outside the time interval ($T_1$).

6. A device according to claim 5, characterized by an integrating circuit (33), a first input of which is connected to the output of the differentiation circuit (32) and a second input of which is connected to an output of the further logic circuit (72) and which is used for producing an output signal, the amplitude of which corresponds to the integral of a part of the first auxiliary signal (B) located between the third instant ($t_3$) and the fourth instant ($t_4$).

**Revendications**

1. Procédé d'analyse de particules en suspension dans un fluide ayant une conductivité différente de celle des particules, en particulier un procédé d'analyse de particules sanguines, comprenant les pas suivants:

a) faire passer le fluide par un orifice,

b) appliquer un signal électronique entre deux électrodes disposées de chaque côté de l'orifice et reliées à un circuit de mesure,

c) former des impulsions électriques (A) correspondant aux changements du niveau du signal provoqués par le passage des particules à travers l'orifice,

d) former un premier signal auxiliaire (B) dont la forme d'onde correspond à la première dérivée par rapport au temps de la forme d'onde de chaque impulsion (A),

e) détecter un premier instant ($t_1$) auquel l'amplitude du premier signal auxiliaire dépasse un premier niveau de seuil prédéterminé ($S_1$), caractérisé en ce qu'il comprend en plus les pas suivants

f) vérifier à un deuxième instant ($t_2$), qui suit le premier instant ($t_1$) après un intervalle de temps prédéterminé ($T_0$), si l'amplitude du premier signal auxiliaire (B) audit deuxième instant a déjà dépassé un deuxième niveau de seuil prédéterminé ($S_2$), qui est plus grand que le premier niveau de seuil ($S_1$), et

g) si l'amplitude du premier signal auxiliaire (B) au deuxième instant ($t_2$) a dépassé le deuxième

niveau de seuil ($S_2$), compter l'impulsion (A) comme une impulsion ayant une amplitude égale à zéro.

2. Procédé selon la revendication 1, caractérisé par les autres pas suivants:

h) comparer l'intervalle de temps ($\tau$) compris entre un troisième instant ($t_3$), défini par le point de pente nulle au sommet de l'impulsion (A), et un quatrième instant ($t_4$), défini par le point du premier signal auxiliaire (B) qui correspond à la fin du flanc descendant de l'impulsion (A) et où le premier signal auxiliaire (B) atteint la valeur zéro, avec une durée de seuil prédéterminée ($T_1$),

i) si l'intervalle de temps mesuré ($\tau$) est plus court que la durée de seuil citée ($T_1$), ne pas compter l'impulsion (A) et ne pas tenir compte de l'information portée par celle-ci, ou

j) si l'intervalle de temps mesuré ($\tau$) est égal ou plus long que la durée de seuil ($T_1$), compter l'impulsion (A) comme étant représentative d'une particule et tenir compte de l'information portée par celle-ci.

3. Procédé selon la revendication 1 ou la revendication 2, caractérisé par un autre pas de processus suivant:

former un signal dont l'amplitude correspond à l'intégrale d'une partie du premier signal auxiliaire (B) comprise entre un troisième instant ($t_3$), défini par le point de pente nulle au sommet de l'impulsion (A) et un quatrième instant ($t_4$), défini par le point du premier signal auxiliaire (B) qui correspond à la fin du flanc descendant de l'impulsion (A) et où le premier signal auxiliaire (B) atteint la valeur zéro.

4. Appareil pour la mise en œuvre du procédé selon la revendication 1 avec un détecteur d'impulsions (35), pour saisir des impulsions électriques (A), qui chacune correspond au passage d'une particule à travers un orifice de mesure, ledit détecteur d'impulsions comprenant les circuits suivants:

– un circuit dérivateur (32) pour former le premier signal auxiliaire (B) dont la forme d'onde correspond à la première dérivée par rapport au temps de la forme d'onde de chaque impulsion (A),

– un premier comparateur (41) relié à la sortie du circuit dérivateur (32) pour détecter un premier instant ($t_1$) auquel l'amplitude du premier signal auxiliaire (B) dépasse un premier niveau de seuil prédéterminé ($S_1$), et fournir un signal de sortie correspondant, caractérisé par

– un deuxième comparateur (42) relié à la sortie du circuit dérivateur (32) pour détecter un deuxième instant ($t_2$) auquel le premier signal auxiliaire (B) dépasse un deuxième niveau de seuil prédéterminé ($S_2$), lequel est plus grand que le premier niveau de seuil ($S_1$), et pour fournir un signal de sortie correspondant,

– un circuit logique (43) relié aux sorties des deux comparateurs (41, 42) et

– un compteur (44) branché entre une sortie et une entrée du circuit logique (43) pour former un signal de sortie sous forme d'une impulsion, dont la durée définit un intervalle de temps ($T_0$) prédéterminé, commençant avec le premier instant cité ($t_1$),

dans lequel le circuit logique (43) réalise le comptage de l'impulsion reçue à l'entrée du circuit dérivateur (32) comme une impulsion d'amplitude égale à zéro, si le deuxième instant ($t_2$) tombe dans l'intervalle de temps ($T_0$) défini par le compteur.

5. Appareil selon la revendication 4, caractérisé par un détecteur d'impulsions supplémentaire (34), qui comprend les circuits suivants:

– un autre circuit comparateur (71) relié à la sortie du circuit dérivateur (32) pour former un signal de sortie dont la durée ($\tau$) s'étend d'un troisième instant ($t_3$), défini par le point de pente nulle au sommet de l'impulsion, à un quatrième instant ($t_4$), défini par le point du premier signal auxiliaire qui correspond à la fin du flanc descendant de l'impulsion et où le premier signal auxiliaire atteint la valeur zéro,

– un autre circuit logique (72) relié à la sortie de l'autre circuit comparateur (71) et

– un autre compteur (73) branché entre une sortie et une entrée de l'autre circuit logique (72) pour produire un signal de sortie, qui représente une impulsion, dont la durée est définie par un intervalle de temps prédéterminé ($T_1$) commençant au troisième instant ($t_3$), l'autre circuit logique (72) servant à commander les opérations suivantes:

– ne pas compter l'impulsion reçue à l'entrée du circuit dérivateur (32) et ne pas tenir compte de l'information lui correspondant, si le flanc descendant de l'impulsion à la sortie de l'autre circuit comparateur (71) tombe dans l'intervalle de temps ($T_1$) prédéterminé, ou

– compter l'impulsion reçue à l'entrée du circuit dérivateur (32) comme étant représentative d'une particule si le flanc descendant de l'impulsion à la sortie de l'autre circuit comparateur (71) tombe en dehors de l'intervalle de temps ($T_1$).

6. Appareil selon la revendication 5 caractérisé par le fait qu'il comporte un circuit intégrateur (33) dont une première entrée est reliée à la sortie du circuit dérivateur (32) et dont une deuxième entrée est reliée à une sortie de l'autre circuit logique (72), pour former un signal de sortie dont l'amplitude correspond à l'intégrale d'une partie du premier signal auxiliaire (B) comprise entre le troisième instant ($t_3$) et le quatrième instant ($t_4$).

11
12
13
13a
13b
14
15
16
17
18

Fig. 1

22
$S_2$
21
$\tau$
$S_1$
$t_1$
$t_2$
$t_3$
$t_4$
t
$T_0$

Fig. 2

31
32
33
A
B
P
34
M
N
35
G

Fig. 3

41
$S_1$
B
C
43
42
G
E
D
$S_2$
44
F
H

Fig. 4

51
52
K
J
D
C
F
G
E
H

Fig. 5

A
B
C
D
G
$S_2$
$S_1$
61
62
63
t
$t_1$
$t_2$
$t_5$
$t_6$
$t_7$
$T_0$

Fig. 6

71
72
B
Q
M
N
T
73
U
H

Fig. 7

81
82
W
V
Q
U
M
N
T
H

Fig. 8

A
B
Q
P
N
91
92
93
94
t
t
t3
t4
t13
t14
T1
τ
T1
t14
t15


Fig. 9

31
32
33
A
B
P
111
41
M
N
S1
G
42
112
S2
71
H

Fig. 10